# EUROPÄISCHE PATENTSCHRIFT

(11) **EP 4 178 835 B1**
(45) Veröffentlichungstag und Bekanntmachung des Hinweises auf die Patenterteilung: **29.04.2026**
(21) Anmeldenummer: 21735913.2
(22) Anmeldetag: 23.06.2021
(51) Int. Cl.: B60R 25/04, B62H 5/12, B62M 6/40, B60R 25/06, B62H 5/08, F16D 11/04, F16D 11/14, F16D 27/00, F16D 41/24, F16D 41/26, F16D 41/28

(54) **VERFAHREN ZUR WEGFAHRSPERRE, KUPPLUNG, FAHRZEUGGETRIEBE, ANTRIEBSEINHEIT UND FAHRZEUG**
METHOD FOR IMMOBILISATION, CLUTCH, VEHICLE TRANSMISSION, DRIVE UNIT, AND VEHICLE
PROCÉDÉ D'IMMOBILISATION, EMBRAYAGE, TRANSMISSION DE VÉHICULE, UNITÉ D'ENTRAÎNEMENT ET VÉHICULE

(30) Priorität: 08.07.2020 DE 102020208562
(43) Veröffentlichungstag der Anmeldung: 17.05.2023
(73) Patentinhaber: Robert Bosch GmbH, 70442 Stuttgart (DE)
(72) Erfinder: BRAUN, Sigmund, 72127 Kusterdingen (DE); YULISH, Vladislav, 72762 Reutlingen (DE); HAEUSSERMANN, Conrad, 72818 Trochtelfingen (DE)
(86) Internationale Anmeldenummer: PCT/EP2021/067058
(87) Internationale Veröffentlichungsnummer: WO 2022/008236

(56) Entgegenhaltungen:
- EP-A1- 3 431 685
- WO-A1-2016/173804
- WO-A1-2019/179587
- WO-A2-2019/203644
- CN-A- 107 161 245
- DE-A1- 10 143 204
- DE-A1- 102014 109 000
- DE-C- 104 527
- US-A- 509 175
- US-A1- 2019 032 729
- FISCHER G ET AL: "xDrive. Der neue Allradantrieb im BMW X3 und BMW X5", ATZ, vol. 106, no. 2, 1 January 2004 (2004-01-01), DE, pages 92 - 102, XP055167909, ISSN: 0001-2785, DOI: 10.1007/BF03221602

## Beschreibung

Die vorliegende Erfindung betrifft ein Verfahren zur Wegfahrsperre eines Fahrzeugs. Die Erfindung betrifft auch eine Kupplung, insbesondere einen Freilauf, welche dazu eingerichtet ist, das Verfahren zur Wegfahrsperre durchzuführen. Des Weiteren betrifft die Erfindung ein Fahrzeuggetriebe mit der Kupplung beziehungsweise dem Freilauf und eine Antriebseinheit mit der Kupplung beziehungsweise dem Freilauf. Die Erfindung betriff ferner ein Fahrzeug mit der erfindungsgemäßen Kupplung beziehungsweise dem erfindungsgemäßen Freilauf und/oder ein Fahrzeug mit dem erfindungsgemäßen Fahrzeuggetriebe und/oder ein Fahrzeug mit der erfindungsgemäßen Antriebseinheit, insbesondere betriff die Erfindung als Fahrzeug ein Elektrofahrrad.

### Stand der Technik

Fahrzeugdiebstähle werden in der Regel mit Schlössern vermieden. Solche Fahrzeugschlösser, insbesondere Ketten- oder Bügelschlösser für Fahrräder sind allerdings nicht gut automatisiert zu betätigen, häufig schmutzig sowie unhandlich und schwer im Transport. Des Weiteren kann das Fahrzeug bei einer Demontage oder einer Zerstörung eines Fahrzeugschlosses normal weiterbetrieben werden, weshalb ein alternatives und/oder ein zusätzliches Konzept zur Diebstahlvermeidung gewünscht ist.

Die Schrift WO 2019/203644 A2 offenbart ein Fahrradschloss.

Das Dokument EP 3 431 685 A1 offenbart eine Fahrradverriegelungsvorrichtung und ein Verriegelungsverfahren.

Die Schrift WO 2016/173804 A1 offenbart eine Wegfahrsperre für Fahrräder.

Ferner wird auf die Druckschriften US 2019/032729 A1, US 509 175 A, DE 10 2014 109000 A1, DE 101 43 204 A1 und WO 2019/179587 A1 verwiesen.

Kupplungen, beispielsweise aufweisend axiale Klauenkupplungs-Verzahnungen, sind im Stand der Technik bekannt.

Ein Freilauf wird in dieser Anmeldung als eine spezifische Ausführungsform einer Kupplung verstanden. Ein Freilauf als Kupplung kann ein Drehmoment nur in einer vorgegebenen Drehrichtung übertragen. Bei einer Umkehr der Drehrichtung oder wenn eine Drehzahl einer anzutreibenden Komponente größer als diejenige einer treibenden Komponente ist, wird die Verbindung zur Kraftübertragung selbsttätig gelöst, wobei die treibende Komponente beispielsweise eine Tretachse eines Fahrrads und die anzutreibende Komponente ein Hinterrad oder ein Abtriebsritzel ist, wobei das Abtriebsritzel insbesondere mit einer Tretachse des Fahrrads verbunden ist. Bekannte Freiläufe können beispielsweise Klemmrollen, Klemmkörper, Sperrklinken, Klauenringe und/oder Schlingfedern aufweisen. Sperrklinkenfreiläufe sind beispielsweise allgemein durch ein Klickergeräusch im Freilaufbetrieb bekannt. Freiläufe können des Weiteren als Zahnscheiben-Freilauf ausgestaltet sein, wobei zwei ringförmige Zahnscheiben in axialer Richtung nebeneinander angeordnet sind. Eine ringförmige Zahnscheibe eines Zahnscheiben-Freilaufs umfasst ferner in der Regel jeweils an einer Seite in Umfangsrichtung keilförmig und in axialer Richtung ausgestalteten Zähne. Die zwei Zahnscheiben sind dazu eingerichtet, mittels der Zähne in der vorgegebenen Drehrichtung ineinander einzugreifen und somit ein Drehmoment zu übertragen. Der mechanische Kontakt durch das Ineinandergreifen wird durch eine Federkraft in axialer Richtung auf eine der Zahnscheiben unterstützt beziehungsweise sichergestellt. Entgegen der Drehrichtung laufen die in Umfangsrichtung keilförmigen Zähne eines Zahnscheiben-Freilaufs aneinander ab. Ein Fahrerfreilauf eines Fahrrads ermöglicht es einem Fahrer eines Fahrrads beispielsweise die Pedale rückwärts zu drehen, da bei rückwärts gerichteter Drehung der Pedale beziehungsweise bei einer Drehung des Freilaufs entgegen der vorgegebenen Drehrichtung ein Kraft- und/oder Formschluss zur Drehmoment- beziehungsweise Kraftübertragung innerhalb des Freilaufs unterbrochen ist. Elektrofahrräder erzeugen in der Regel ein Motordrehmoment zur Kraftunterstützung des Fahrers mittels eines Elektromotors, beispielsweise in Abhängigkeit eines erfassten Fahrerdrehmoments. Ein Fahrerfreilauf bei Elektrofahrrädern verhindert ein Mitdrehen der Pedale während des Betriebs, beispielsweise im Betrieb einer Schiebehilfe und/oder in kurzen Phasen eines Nachdrehens des Elektromotors im Normalbetrieb. Beispielsweise würde ein Nachdrehen der Pedale durch ein zur Kraftunterstützung des Fahrers erzeugtes Motordrehmoment ohne den Fahrerfreilauf resultieren, da das Motordrehmoment in der Regel erst kurz nach einem Stopp einer Kraft des Fahrers auf die Pedale auf Null reduziert wird. Bei Elektrofahrrädern wird folglich im Antriebsstrang sehr häufig ein Fahrerfreilauf als Kupplung zwischen der Tretachse und einem zur Kraftunterstützung des Fahrers angeordneten Elektromotor als Antriebsmotor angeordnet, insbesondere bei einer Anordnung des Elektromotors in der Nähe der Tretachse beziehungsweise an der sogenannten Mittelmotorposition.

Die Aufgabe der vorliegenden Erfindung ist es, eine Diebstahlvermeidung eines Elektrofahrrads zu verbessern.

### Offenbarung der Erfindung

Die vorstehende Aufgabe wird erfindungsgemäß entsprechend der unabhängigen Ansprüche 1, 7, 12, 13 und 14 gelöst. Vorteilhafte Weiterbildungen ergeben sich aus den abhängigen Ansprüchen.

Die Erfindung betrifft ein Verfahren zur Wegfahrsperre eines Fahrzeugs, wobei ein Antriebsstrang des Fahrzeugs eine Kupplung aufweist, wobei die Kupplung insbesondere ein Freilauf und besonders bevorzugt ein Zahnscheiben-Freilauf ist.

Die erfindungsgemäße Kupplung umfasst eine erste Kupplungskomponente und eine zweite Kupplungskomponente, welche koaxial zueinander angeordnet sind. Die erste Kupplungskomponente ist folglich insbesondere eine erste Freilaufkomponente und die zweite Kupplungskomponente ist insbesondere eine zweite Freilaufkomponente. Die erste und zweite Kupplungskomponente sind dazu eingerichtet, sich mechanisch lösbar zu kontaktieren. Erfindungsgemäß resultiert der mechanische Kontakt durch eine Federkraft in einer axialen Richtung auf die erste Kupplungskomponente oder die zweite Kupplungskomponente und in Richtung der jeweils anderen Kupplungskomponente. Die erste Kupplungskomponente und die zweite Kupplungskomponente umfassen erfindungsgemäß jeweils eine ringförmige Zahnscheibe, wobei jede Zahnscheibe vorteilhafterweise in Umfangsrichtung der Zahnscheibe verteilte und in axialer Richtung ausgeprägte Zähne aufweist, wobei die Zähne besonders bevorzugt keilförmig sind. Jede Zahnscheibe ist vorteilhafterweise dazu eingerichtet, in die andere Zahnscheibe mittels der Zähne einzugreifen und einen lösbaren mechanischen Kontakt zu bilden. Ist die Kupplung ein Freilauf, wird vorteilhafterweise durch das Ineinandergreifen der in Umfangsrichtung angeordneten Zähne der zwei Zahnscheiben in einer vorgegebenen Drehrichtung der mechanische Kontakt zur Drehmomentübertragung in der vorgegebenen Drehrichtung gebildet, wobei die Zähne insbesondere keilförmig sind. Vorteilhafterweise ist die erste und/oder zweite Kupplungskomponente des Weiteren dazu eingerichtet, koaxial um eine Welle angeordnet und durch diese Welle mittels wenigstens einer Nut der ersten und/oder zweiten Kupplungskomponente geführt zu werden, wobei die Welle insbesondere eine Tretachse eines Fahrrads als Fahrzeug ist, welche zur Führung der ersten und/oder zweiten Kupplungskomponente vorteilhafterweise wenigstens eine Schiene aufweist, welche in radialer Richtung an der Außenfläche der Welle angeordnet ist und in axialer Richtung der Welle an der Außenfläche verläuft. Die erste und/oder zweite Kupplungskomponente sind folglich mit anderen Worten insbesondere mittels der Nut dazu eingerichtet, durch die Schiene der Welle in axialer Richtung der Welle geführt zu werden. Die erste und zweite Kupplungskomponente sind durch den mechanischen Kontakt dazu eingerichtet, in zumindest einer vorgegebenen Drehrichtung drehfest miteinander verbunden zu sein. Wenn die Kupplung ein Freilauf ist, sind die erste und zweite Kupplungskomponente beziehungsweise Freilaufkomponente dazu eingerichtet, bei einer Drehung entgegen der vorgegebenen Drehrichtung gegeneinander frei drehbar miteinander verbunden zu sein. Die Kupplung ist vorteilhafterweise des Weiteren dazu eingerichtet, eine Welle des Antriebsstrangs mit einer koaxial um diese Welle angeordneten Hohlwelle, insbesondere zumindest in der vorgegebenen Drehrichtung, drehfest zu verbinden, wobei die erste Kupplungskomponente insbesondere dazu eingerichtet ist, drehfest mit der Welle verbunden zu sein, und die zweite Kupplungskomponente dazu eingerichtet ist, drehfest mit der Hohlwelle verbunden zu sein.

Das erfindungsgemäße Verfahren umfasst eine Erfassung einer Eingabe eines Nutzers zur Aktivierung einer Wegfahrsperre. Anschließend wird in einem weiteren Schritt ein Aktuator in Abhängigkeit der erfassten Eingabe zur Aktivierung der Wegfahrsperre angesteuert, wodurch die erste Kupplungskomponente und/oder die zweite Kupplungskomponente in einer axialen Richtung bewegt beziehungsweise verschoben wird. Dadurch wird der lösbare mechanische Kontakt zwischen der ersten Kupplungskomponente und der zweiten Kupplungskomponente getrennt, insbesondere wird ein Ineinandergreifen der keilförmigen Zähne der Zahnscheiben eines Freilaufs getrennt. Nach der Ansteuerung des Aktuators kann vorteilhafterweise kein Drehmoment von der ersten Kupplungskomponente auf die zweite Kupplungskomponente übertragen werden. Dadurch resultiert der Vorteil, dass bei einer aktivierten Wegfahrsperre ein Fahrer des Fahrzeugs und/oder ein Motor des Fahrzeugs keine Kraft beziehungsweise kein Drehmoment mehr auf ein Antriebsrad übertragen kann. Ein Diebstahl beziehungsweise ein unerwünschtes Wegbewegen des Fahrzeugs wird somit vorteilhafterweise durch das Verfahren erheblich erschwert.

In einer Ausgestaltung erfolgt eine Erfassung der Eingabe des Nutzers zur Aktivierung der Wegfahrsperre durch eine Erfassung einer Entnahme eines Human-Maschine-Interfaces beziehungsweise einer Anzeigevorrichtung aus einer Halterung des Fahrzeugs für das Human-Maschine-Interface oder durch eine Erfassung einer Entnahme eines Schlüssels aus einem Schloss des Fahrzeugs oder durch eine Erfassung einer räumlichen Entfernung eines Schlüssels von dem Fahrzeug oder durch eine Erfassung einer räumlichen Entfernung einer mobilen Recheneinheit insbesondere eines Smartphones, von dem Fahrzeug. Nach der erfassten Eingabe des Nutzers wird vorteilhafterweise ein elektrisches Sperrsignal oder ein elektromagnetisches Sperrsignal mittels des Human-Maschine-Interfaces und/oder der Halterung und/oder eines Steuergeräts und/oder des Schlüssels und/oder der mobilen Recheneinheit erzeugt, welches dazu eingerichtet ist, die Ansteuerung des Aktuators zu verursachen. Durch diese Ausgestaltung wird die Wegfahrsperre durch einen Nutzer beziehungsweise Fahrer des Fahrzeugs vorteilhafterweise leicht und komfortabel sowie ohne einen zusätzlichen Eingabeschritt automatisch aktiviert.

In einer Weiterführung der Erfindung kann es vorgesehen sein, dass das Verfahren nach der Ansteuerung des Aktuators eine Erfassung einer weiteren Eingabe des Nutzers zur Deaktivierung der Wegfahrsperre umfasst. Die Erfassung der weiteren Eingabe des Nutzers erfolgt vorteilhafterweise durch eine Erfassung einer Positionierung beziehungsweise Anordnung des Human-Maschine-Interfaces an einer Halterung des Fahrzeugs für das Human-Maschine-Interface oder durch eine Erfassung einer Anordnung eines Schlüssels in einem Schloss des Fahrzeugs oder durch eine Erfassung einer räumlichen Annäherung eines Schlüssels an das Fahrzeug oder durch eine Erfassung einer räumlichen Annäherung einer mobilen Recheneinheit insbesondere eines Smartphones, an das Fahrzeug. Nach der erfassten weiteren Eingabe des Nutzers wird des Weiteren vorteilhafterweise ein elektrisches Entriegelungssignal oder ein elektromagnetisches Entriegelungssignal mittels des Human-Maschine-Interfaces und/oder der Halterung und/oder eines Steuergeräts und/oder des Schlüssels und/oder der mobilen Recheneinheit erzeugt, welches dazu eingerichtet ist, die Ansteuerung des Aktuators zu verursachen. Das Entriegelungssignal wird insbesondere verschlüsselt an eine Recheneinheit gesendet. Das Entriegelungssignal repräsentiert des Weiteren insbesondere einen Identifizierungcode zu dem Human-Maschine-Interface (HMI) und/oder zu dem Schlüssel und/oder zu der mobilen Recheneinheit. Anschließend wird in dieser Weiterführung der Aktuator in Abhängigkeit der erfassten weiteren Eingabe zur Deaktivierung der Wegfahrsperre angesteuert, wodurch die erste Kupplungskomponente und/oder die zweite Kupplungskomponente in axialer Richtung bewegt und die erste Kupplungskomponente und die zweite Kupplungskomponente miteinander in mechanischen Kontakt gebracht, insbesondere mittels der Zähne, beziehungsweise in zumindest einer Drehrichtung zur Übertragung eines Drehmoments mechanisch verbunden werden. Insbesondere resultiert durch die Ansteuerung des Aktuators in Abhängigkeit der erfassten weiteren Eingabe zur Deaktivierung der Wegfahrsperre ein Ineinandergreifen von den in Umfangsrichtung keilförmigen Zähnen einer Zahnscheibe eines Zahnscheiben-Freilaufs. Dadurch wird in der vorgegebenen Drehrichtung des Freilaufs eine Drehmomentübertragung mittels des Freilaufs ermöglicht. Durch diese Weiterführung resultiert der Vorteil, dass die Wegfahrsperre durch einen Nutzer beziehungsweise Fahrer des Fahrzeugs leicht und komfortabel sowie ohne einen zusätzlichen Eingabeschritt automatisch deaktiviert wird.

In einer bevorzugten Ausgestaltung der Erfindung wird durch die Ansteuerung des Aktuators zur Aktivierung der Wegfahrsperre ein Stellzahnrad gedreht, wobei der Aktuator insbesondere einen Elektromotor aufweist. Der Elektromotor ist vorteilhafterweise dazu eingerichtet, das mit dem Rotor drehfest verbundene Stellzahnrad zu drehen. Das Stellzahlrad greift in eine Verzahnung eines Schraubelements ein. Das Schraubelement ist insbesondere koaxial zu einer Welle des Antriebsstrangs angeordnet. Das Schraubelement weist als Verzahnung vorteilhafterweise eine Außenverzahnung auf, wobei die Außenverzahnung insbesondere gradverzahnt ist. Das Schraubelement weist des Weiteren ein Gewinde auf, insbesondere ein Außengewinde. Das Schraubelement wird durch das in die Verzahnung eingreifende drehende Stellzahnrad und mittels des Gewindes gegenüber einem feststehenden Gegengewinde verdreht, so dass eine Bewegung des Schraubelements in axialer Richtung resultiert. Das Schraubelement umfasst des Weiteren einen mechanischen Anschlag. Bei der Drehung beziehungsweise der axialen Bewegung des Schraubelements verschiebt das Schraubelement mittels des mechanischen Anschlags die erste Kupplungskomponente und/oder die zweite Kupplungskomponente in axialer Richtung. Dadurch wird vorteilhafterweise der mechanische Kontakt zwischen der ersten Kupplungskomponente und der zweiten Kupplungskomponente getrennt.

In einer optionalen Ausführung der Erfindung ist die erste Kupplungskomponente und/oder die zweite Kupplungskomponente magnetisiert. Des Weiteren umfasst in dieser Ausführung der Aktuator eine Spule. Durch die Ansteuerung wird mittels der Spule ein magnetisches Feld erzeugt, welches auf die magnetisierte erste Kupplungskomponente und/oder die magnetisierte zweite Kupplungskomponente wirkt. Durch eine basierend auf dem Magnetfeld resultierende Magnetkraft wird in dieser Ausführung die erste Kupplungskomponente und/oder die zweite Kupplungskomponente verschoben und der mechanische Kontakt zwischen der ersten Kupplungskomponente und der zweiten Kupplungskomponente getrennt. In dieser Ausführung resultiert der Vorteil, dass die Trennung des mechanischen Kontaktes zwischen der ersten Kupplungskomponente und der zweiten Kupplungskomponente verschleißfrei und sehr schnell erfolgen kann. Des Weiteren weist diese Ausführung vorteilhafterweise einen relativ kleinen Bauraum für den Aktuator auf.

In einer weiteren Ausführung der Erfindung ist der Aktuator dazu eingerichtet, durch die Ansteuerung einen Stift in einer am Umfang der Kupplung und zwischen der ersten Kupplungskomponente und der zweiten Kupplungskomponente angeordneten Nut zu positionieren. Der mittels des Aktuators in der Nut positionierte Stift wird bei einer Drehung der Kupplung durch die Nut geführt, wobei die Nut eine Verengung aufweist.

Dle Kupplung ist bei einer Drehung des Kupplung, insbesondere in der vordefinierten Drehrichtung, dazu eingerichtet, die erste Kupplungskomponente und/oder die zweite Kupplungskomponente in axialer Richtung mittels des Stifts und der Verengung zu verschieben. Dadurch wird der mechanische Kontakt zwischen der ersten Kupplungskomponente und der zweiten Kupplungskomponente getrennt. In dieser Ausführung resultiert der Vorteil, dass die Trennung des mechanischen Kontaktes zwischen der ersten Kupplungskomponente und der zweiten Kupplungskomponente mit wenigen Komponenten und sehr kleinem Bauraum erfolgen kann.

Die Erfindung betrifft des Weiteren eine Kupplung, wobei die Kupplung insbesondere ein Freilauf und besonders bevorzugt ein Zahnscheiben-Freilauf ist. Die Kupplung umfasst wenigstens eine erste Kupplungskomponente und eine zweite Kupplungskomponente. Die erste Kupplungskomponente und die zweite Kupplungskomponente sind koaxial zueinander angeordnet und dazu eingerichtet, durch einen lösbaren mechanischen Kontakt zwischen der ersten Kupplungskomponente und der zweiten Kupplungskomponente bei einer Drehung der Kupplung in zumindest einer vorgegebenen Drehrichtung drehfest verbunden zu sein. Bevorzugt sind die erste Kupplungskomponente und die zweite Kupplungskomponente bei einer Drehung entgegen der vorgegebenen Drehrichtung gegeneinander frei drehbar, so dass die Kupplung ein Freilauf ist. Die Kupplung weist des Weiteren einen Aktuator auf, wobei der Aktuator bei einer aktivierten Wegfahrsperre dazu eingerichtet ist, die erste Kupplungskomponente und/oder die zweite Kupplungskomponente in axialer Richtung zu verschieben, wodurch der mechanische Kontakt zwischen der ersten und zweiten Kupplungskomponente getrennt wird. Vorteilhafterweise sind die erste und/oder zweite Kupplungskomponente dazu eingerichtet, auf einer Welle eines Antriebsstrangs eines Fahrzeugs geführt zu werden. Des Weiteren ist die Kupplung vorteilhafterweise dazu eingerichtet, eine Welle des Antriebsstrangs mit einer koaxial um diese Welle angeordneten Hohlwelle in der vorgegebenen Drehrichtung drehfest zu verbinden. Die Kupplung weist den Vorteil auf, dass ein zuverlässiger mechanischer Kontakt zwischen der ersten und zweiten Kupplungskomponente erzeugt oder getrennt werden kann, wodurch bei einer deaktivierten Wegfahrsperre eine Übertragung eines Drehmoments mittels der Kupplung gewährleistet ist. Des Weiteren kann basierend auf einer Aktivierung der Wegfahrsperre durch eine Ansteuerung des Aktuators eine Übertragung eines Drehmoments mittels der Kupplung unterbunden und somit ein zuverlässiger Diebstahlschutz erzeugt werden, da das Fahrzeug bei deaktivierter Wegfahrsperre vorteilhafterweise nicht mehr selbstständig bewegt beziehungsweise betrieben werden kann.

Die Kupplung kann in einer optionalen Ausgestaltung eine Recheneinheit aufweisen. Die Recheneinheit ist dazu eingerichtet, ein elektrisches oder ein elektromagnetisches Entriegelungssignal zu empfangen. Des Weiteren ist die Recheneinheit dazu eingerichtet, den Aktuator in Abhängigkeit des empfangenen Entriegelungssignals zur Erzeugung des mechanischen Kontaktes anzusteuern, wobei das Entriegelungssignal insbesondere einen Identifizierungcode repräsentiert. Durch diese optionale Ausgestaltung resultiert der Vorteil, dass die Wegfahrsperre durch einen Nutzer beziehungsweise Fahrer des Fahrzeugs leicht und komfortabel sowie ohne einen zusätzlichen Eingabeschritt automatisch deaktiviert werden kann.

In einer bevorzugten Ausgestaltung umfasst der Aktuator der Kupplung einen Elektromotor. Der Rotor des Elektromotors ist mit einem Stellzahnrad drehfest verbunden. Das Stellzahnrad greift in eine Verzahnung eines Schraubelements ein und ist dazu eingerichtet, mittels eines Gewindes gegenüber einem feststehenden Gegengewinde gedreht und in axialer Richtung bewegt zu werden. Das Gegengewinde ist vorteilhafterweise an einem Gehäuse eines Fahrzeuggetriebes oder an einem Gehäuse einer Antriebseinheit und/oder an einem Rahmen des Fahrzeugs fixiert, so dass es vorteilhafterweise örtlich feststehend ist. Das Schraubelement weist einen mechanischen Anschlag auf, welcher dazu eingerichtet ist, die erste Kupplungskomponente und/oder die zweite Kupplungskomponente in axialer Richtung zu verschieben. Durch diese Ausgestaltung der Kupplung kann bei einer aktivierten Wegfahrsperre vorteilhafterweise der mechanische Kontakt zwischen der ersten Kupplungskomponente und der zweiten Kupplungskomponente in axialer Richtung zuverlässig getrennt werden. Diese Ausgestaltung der Kupplung weist den technischen Vorteil auf, dass die resultierende Funktion der Wegfahrsperre des Fahrzeugs robust gegenüber Stößen und gegenüber externen oder internen Magnetfeldern ist, so dass eine hohe Zuverlässigkeit und Langlebigkeit resultiert.

Vorzugsweise umfasst die Kupplung des Weiteren ein optionales Federelement. Das Federelement ist dazu eingerichtet, eine Federkraft zu erzeugen, wobei die Federkraft in axialer Richtung auf die erste Kupplungskomponente und in Richtung der zweiten Kupplungskomponente oder in axialer Richtung auf die zweite Kupplungskomponente und in Richtung der ersten Kupplungskomponente wirkt. In dieser Ausführung resultiert der Vorteil, dass eine versehentliche Aktivierung der Wegfahrsperre vermieden und die Deaktivierung der Wegfahrsperre erleichtert wird. Des Weiteren wird in dieser Ausführung vorteilhafterweise bei deaktivierter Wegfahrsperre ein zuverlässiger mechanischer Kontakt zwischen der ersten und zweiten Kupplungskomponente erzeugt, wodurch eine Übertragung eines Drehmoments mittels der Kupplung bei einer deaktivierten Wegfahrsperre in der vorgegebenen Drehrichtung gewährleistet ist.

In einer anderen Ausgestaltung ist die erste Kupplungskomponente und/oder die zweite Kupplungskomponente magnetisiert. Des Weiteren umfasst der Aktuator in dieser Ausgestaltung eine Spule, welche bei einer aktivierten Wegfahrsperre dazu eingerichtet ist, ein magnetisches Feld zu erzeugen, wobei das magnetische Feld auf die magnetisierte erste Kupplungskomponente und/oder die magnetisierte zweite Kupplungskomponente wirkt und die erste Kupplungskomponente und/oder die zweite Kupplungskomponente durch eine Magnetkraft des Magnetfelds in axialer Richtung verschoben wird. Durch diese Ausgestaltung resultiert vorteilhafterweise eine kompakte sowie verschleiß- und wartungsarme Kupplung.

In einer weiteren Ausgestaltung ist der Aktuator bei einer aktivierten Wegfahrsperre dazu eingerichtet, einen Stift in einer am Umfang der Kupplung und zwischen der ersten Kupplungskomponente und der zweiten Kupplungskomponente angeordneten Nut zu positionieren. Die Nut ist dazu eingerichtet, den Stift bei einer Drehung der Kupplung zu führen, wobei die Nut wenigstens eine Verengung in Richtung einer der Kupplungskomponenten aufweist. Die Kupplung ist bei einer Drehung der Kupplung, insbesondere in der vorgegebenen Drehrichtung, dazu eingerichtet, die erste Kupplungskomponente und/oder die zweite Kupplungskomponente in axialer Richtung mittels des Stifts und der Verengung zu verschieben. Dadurch wird vorteilhafterweise der mechanische Kontakt zwischen der ersten Kupplungskomponente und/oder der zweiten Kupplungskomponente getrennt wird. Durch diese Ausgestaltung resultiert vorteilhafterweise eine kompakter und günstiger Kupplung.

Die Erfindung betrifft auch ein Fahrzeuggetriebe mit einem erfindungsgemäßen Kupplung.

Die Erfindung betrifft auch eine Antriebseinheit für ein Fahrzeug mit einer erfindungsgemäßen Kupplung, insbesondere eine Antriebseinheit für ein Elektrofahrrad.

Die Erfindung betrifft ferner ein Fahrzeug mit einer erfindungsgemäßen Kupplung, wobei die Kupplung besonders bevorzugt als Freilauf ausgestaltet ist, und/oder ein Fahrzeug mit einem erfindungsgemäßen Fahrzeuggetriebe und/oder einer erfindungsgemäßen Antriebseinheit, insbesondere ist das Fahrzeug ein Elektrofahrrad.

Weitere Vorteile ergeben sich aus der nachfolgenden Beschreibung von Ausführungsbeispielen mit Bezug zu den Figuren.
Figur 1: Ablaufdiagramm des Verfahrens als Blockschaltbild
Figur 2: Antriebseinheit mit einer Zahnscheiben-Kupplung mit Schraubelement
Figur 3: Antriebseinheit mit einer Zahnscheiben-Kupplung mit Spule
Figur 4: Antriebseinheit mit einer Zahnscheiben-Kupplung mit Stiftaktor
Figur 5a: erste Kupplungskomponente eines Freilaufs als Kupplung
Figur 5b: erste Kupplungskomponente einer Kupplung

### Ausführungsbeispiele

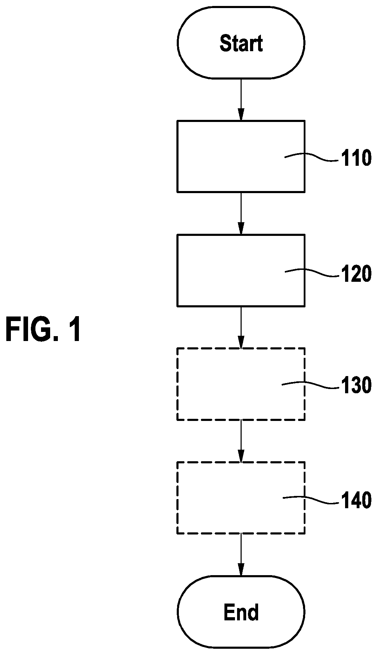

In Figur 1 ist ein Ablaufdiagramm des Verfahrens als Blockschaltbild dargestellt. In einem ersten Schritt 110 wird eine Eingabe eines Nutzers zur Aktivierung einer Wegfahrsperre eines Fahrzeugs erfasst. Im Schritt 110 wird als Eingabe des Nutzers zur Aktivierung der Wegfahrsperre bevorzugt eine Entnahme einer Anzeigevorrichtung beziehungsweise eines Human-Maschine-Interfaces aus einer Halterung des Fahrzeugs erfasst. Anschließend wird in einem zweiten Schritt 120 ein Aktuator in Abhängigkeit der erfassten Eingabe des Nutzers angesteuert. In dem zweiten Schritt 120 wird durch die Ansteuerung des Aktuators eine erste Kupplungskomponente und/oder eine zweite Kupplungskomponente einer Kupplung in axialer Richtung verschoben, wobei die erste Kupplungskomponente und die zweite Kupplungskomponente koaxial zueinander angeordnet sind. Die Kupplung ist insbesondere ein Freilauf. Die erste Kupplungskomponente ist folglich insbesondere eine erste Freilaufkomponente und die zweite Kupplungskomponente ist inbesondere eine zweite Freilaufkomponente. Durch den zweiten Schritt 120 wird der mechanische Kontakt zwischen der ersten Kupplungskomponente und der zweiten Kupplungskomponente getrennt. In einem optionalen dritten Schritt 130 wird eine weitere Eingabe des Nutzers zur Deaktivierung der Wegfahrsperre erfasst. Anschließend wird in einem optionalen vierten Schritt 140 der Aktuator in Abhängigkeit der erfassten weiteren Eingabe zur Deaktivierung der Wegfahrsperre angesteuert. In dem Schritt 140 wird durch die Ansteuerung des Aktuators die erste Kupplungskomponente und/oder die zweite Kupplungskomponente in axialer Richtung zurück verschoben und die erste Kupplungskomponente und die zweite Kupplungskomponente erneut miteinander in mechanischen Kontakt gebracht. Die Erzeugung des mechanischen Kontakts kann im optionalen vierten Schritt 140 durch eine in axialer Richtung wirkenden Federkraft eines optionalen Federelements resultieren. Mit anderen Worten kann es im vierten Schritt 140 vorgesehen sein, dass die Ansteuerung des Aktuators die erste Kupplungskomponente und/oder die zweite Kupplungskomponente in axialer Richtung verschiebt, wodurch die Federkraft die erste Kupplungskomponente oder die zweite Kupplungskomponente an die jeweils andere Kupplungskomponente andrückt.

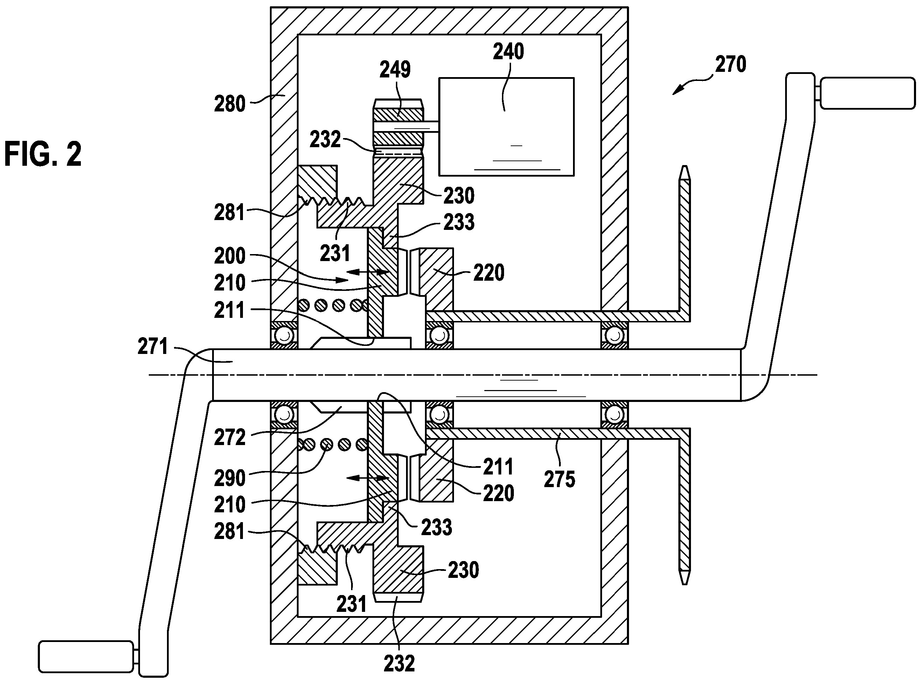

In den Figuren 2 bis 4 ist jeweils eine Antriebseinheit 270 eines Elektrofahrrads mit einer Zahnscheiben-Kupplung als Kupplung 200 an einer Tretachse eines Elektrofahrrads dargestellt, insbesondere ein Zahnscheiben-Freilauf. Im Folgenden wird zunächst die Kupplung 200 in der Antriebseinheit 270 erklärt. Die Kupplung 200 umfasst jeweils eine erste Zahnscheibe als erste Kupplungskomponente 210 und eine zweite Zahnscheibe als zweite Kupplungskomponente 220. Die erste Kupplungskomponente 210 und die zweite Kupplungskomponente 220 sind in diesen Ausführungsbeispielen nebeneinander angeordnet und jeweils ringförmig. Die erste Kupplungskomponente 210 beziehungsweise die erste Zahnscheibe und die zweite Kupplungskomponente 220 beziehungsweise die zweite Zahnscheibe sind koaxial zueinander und koaxial um die Tretachse angeordnet. Die Tretachse als Welle 271 des Antriebsstrangs weist an der Außenfläche in axialer Richtung ausgeprägte Schienen 272 auf. Die erste Kupplungskomponente 210 weist eine zur Anzahl der Schienen 272 korrespondierende Anzahl an Nuten 211 auf. Die Nuten der ersten Kupplungskomponente sind dazu eingerichtet, die Schienen 272 der Welle 271 zu umgreifen. Die erste Kupplungskomponente 210 ist mittels der Nuten 211 und Schienen 272 drehfest mit der Welle 271 verbunden und dazu eingerichtet, in axialer Richtung geführt zu werden. Die zweite Kupplungskomponente 210 ist drehfest mit einer Hohlwelle 275 verbunden, wobei die Hohlwelle 275 ebenfalls koaxial zur Welle 271 angeordnet ist. Die erste Kupplungskomponente 210 und zweite Kupplungskomponente 220 sind ferner dazu eingerichtet, sich mechanisch lösbar zu kontaktieren. Der mechanische Kontakt resultiert bevorzugt aber nicht notwendigerweise durch eine Federkraft in einer axialen Richtung auf die erste Kupplungskomponente 210 in Richtung der zweiten Kupplungskomponente 220, wobei die Federkraft mittels eines optionalen Federelements 290 erzeugt wird. Das optionale Federelement 290 ist bevorzugt zwischen dem Gehäuse 280 der Antriebseinheit 270 und der ersten Kupplungskomponente 210 eingespannt. Die erste Kupplungskomponente 210 beziehungsweise die erste Zahnscheibe und die zweite Kupplungskomponente 220 beziehungsweise die zweite Zahnscheibe weisen jeweils eine Vielzahl axial ausgeprägter und in Umfangsrichtung der jeweiligen Zahnscheibe, vorteilhafterweise gleichmäßig, verteilter Zähne, auf, wobei die Zähne insbesondere in Umfangsrichtung der jeweiligen Zahnscheibe keilförmig ausgeprägt sind. Somit sind die erste Kupplungskomponente 210 beziehungsweise die erste Zahnscheibe und die zweite Kupplungskomponente 220 beziehungsweise die zweite Zahnscheibe dazu eingerichtet, ineinander einzugreifen, insbesondere wenn das optionale Federelement 290 die erste Zahnscheibe und die zweite Zahnscheibe aufeinanderdrückt. Durch das Ineinandergreifen der in Umfangsrichtung verteilten Zähne der zwei Zahnscheiben wird vorteilhafterweise der mechanische Kontakt zur Drehmomentübertragung in der vorgegebenen Drehrichtung gebildet. Die erste Kupplungskomponente 210 und die zweite Kupplungskomponente 220 sind durch eine bevorzugte keilförmige Ausgestaltung der Zähne dazu eingerichtet, in einer vorgegebenen Drehrichtung drehfest miteinander und bei einer Drehung entgegen der vorgegebenen Drehrichtung gegeneinander frei drehbar verbunden zu sein.

In Figur 2 ist eine Antriebseinheit 270 mit einer Kupplung 200 dargestellt, wobei die Kupplung 200 in dieser Ausführung ein Schraubelement 230 sowie einen Stellmotor als Aktuator 240 aufweist. Das Schraubelement 230 ist eine Hohlwelle, welche koaxial zur Tretachse angeordnet ist. Das Schraubelement 230 ist vorteilhafterweise zumindest teilweise außerhalb der ersten Kupplungskomponente 210, der zweiten Kupplungskomponente 220, der Welle 271 und der Hohlwelle 275 angeordnet. Das Schraubelement 230 umfasst ein Außengewinde als Gewinde 231, welches in ein Gegengewinde 281 eingreift. Das Gegengewinde 281 ist ein Innengewinde, beispielsweise ein Innengewinde in einer Bohrung. Das Gegengewinde 281 ist feststehend beziehungsweise drehfest an das Gehäuse 280 der Antriebseinheit 270 fixiert. Das Schraubelement 230 umfasst außerdem an einer Außenfläche eine Außenverzahnung als Verzahnung 232, wobei die Außenverzahnung gradverzahnt und in Umfangsrichtung verläuft. Der Rotor des Stellmotors 240 ist drehfest mit einem gradverzahnten Stellzahnrad 249 verbunden, wobei das Stellzahnrad 249 in die Verzahnung 232 des Schraubelements 230 eingreift. Mit anderen Worten ist der Stellmotor 240 als Aktuator dazu eingerichtet, das Schraubelement 230 gegenüber dem Gegengewinde 281 zu verdrehen beziehungsweise zu drehen, wodurch das Schraubelement 230 in axialer Richtung gegenüber dem Gegengewinde 281 und somit auch gegenüber der Welle 271 bewegt wird. Das Schraubelement 230 umfasst des Weiteren einen mechanischen Anschlag 233 beziehungsweise ein Mitnahmeelement an einer Innenfläche der Hohlwelle. Dieser mechanische Anschlag 233 ist dazu eingerichtet, die erste Kupplungskomponente 210 in axialer Richtung gegenüber der zweiten Kupplungskomponente 220 bei einer Bewegung des Schraubelements 230 in axialer Richtung zu verschieben beziehungsweise mitzunehmen. Bei der axialen Verschiebung der ersten Kupplungskomponente 210 wird die erste Kupplungskomponente 210 mittels der Nuten 211 der ersten Kupplungskomponente 210 und der Schienen 272 der Welle 271 in axialer Richtung geführt. Durch die axiale Verschiebung greifen die Zähne der Zahnscheiben beziehungsweise das erste Kupplungselement und das zweite Kupplungselement nicht mehr ineinander ein. Mit andere Worten wird der mechanische Kontakt zwischen dem ersten Kupplungselement 210 und dem zweiten Kupplungselement 220 durch die axiale Verschiebung getrennt. Damit wird eine Drehmomentübertragung zwischen dem ersten Kupplungselement 210 und dem zweiten Kupplungelement 220 unterbrochen und die Wegfahrsperre aktiviert. Wenn die Kupplung ein Freilauf ist, wird die Drehmomentübertragung insbesondere in der vorgegebenen Drehrichtung unterbrochen.

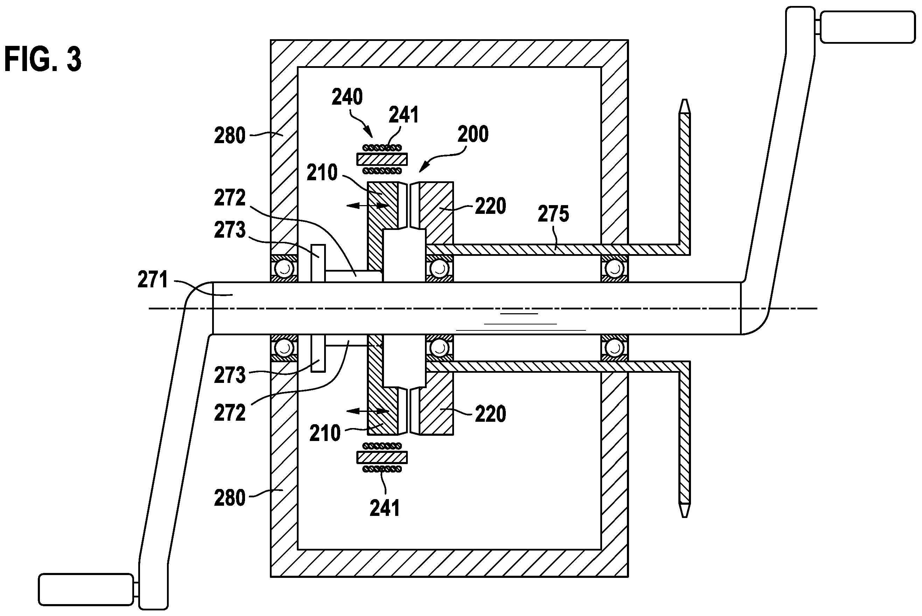

In Figur 3 ist erneut eine Antriebseinheit 270 mit einer Zahnscheiben-Kupplung als Kupplung 200 dargestellt, insbesondere ein Zahnscheiben-Freilauf, wobei die Kupplung 200 in dieser Ausführung wenigstens eine Spule 241 als Aktuator 240 aufweist. Die erste Kupplungskomponente 210 ist in dieser Ausführung magnetisiert. Durch die Ansteuerung 120 fließt ein Strom durch die Spule 241, so dass mittels der Spule 241 ein magnetisches Feld erzeugt wird. Das magnetische Feld wirkt auf die magnetisierte erste Kupplungskomponente 210, wodurch eine resultierende Magnetkraft die erste Kupplungskomponente 210 entlang der Schienen 272 der Welle 271 in axialer Richtung verschiebt, so dass der mechanische Kontakt zwischen der ersten Kupplungskomponente 210 und der zweiten Kupplungskomponente 220 getrennt werden. Die axiale Bewegung der ersten Kupplungskomponente 210 kann ferner mittels eines mechanischen Anschlags 273 der Welle 271 begrenzt werden. Der mechanische Anschlag 273 kann ferner bei einer aktivierten Wegfahrsperre einen Flächenkontakt mit der ersten Kupplungskomponente 210 aufweisen, welcher dazu eingerichtet ist, die magnetisierte erste Kupplungskomponente 210 an den mechanischen Anschlag 273 der Welle zu koppeln beziehungsweise bis zur Deaktivierung der Wegfahrsperre zu fixieren und somit die Trennung des mechanischen Kontaktes zwischen der ersten Kupplungskomponente 210 und der zweiten Kupplungskomponente 220 stromlos aufrechtzuerhalten. Die Rückstellung der ersten Kupplungskomponente 210 erfolgt bevorzugt nach einer erfassten weiteren Eingabe zur Deaktivierung der Wegfahrsperre im Schritt 140 durch erneute Ansteuerung der Spule 241 als Aktuator 240, wobei gegenüber der Ansteuerung zur Aktivierung der Wegfahrsperre die Richtung des Stromflusses in der Spule 241 umgekehrt beziehungsweise das erzeugte Magnetfeld umgepolt wird.

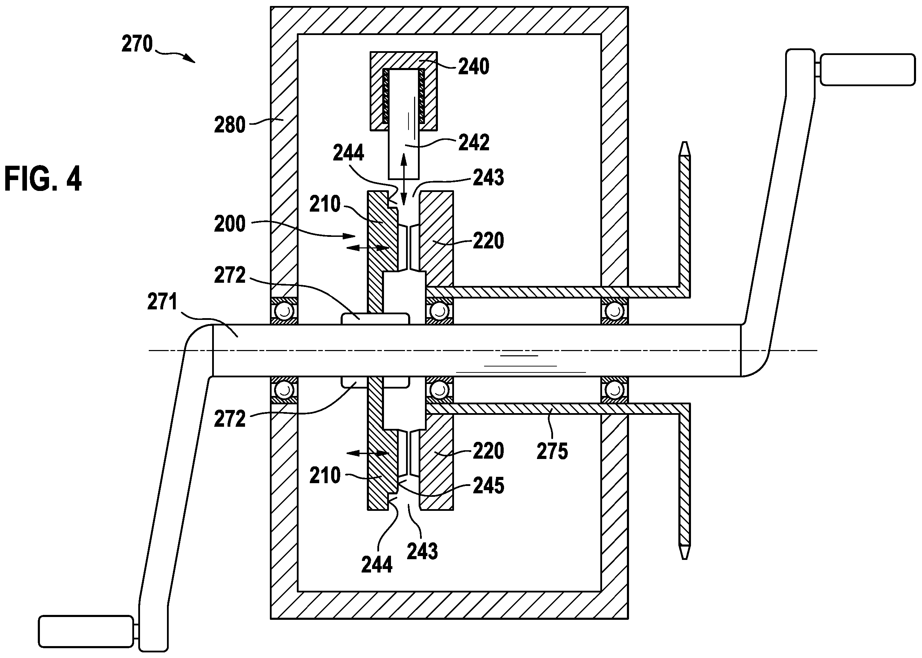

In Figur 4 ist erneut eine Antriebseinheit 270 mit einer Zahnscheiben-Kupplung als Kupplung 200 dargestellt, insbesondere ein Zahnscheiben-Freilauf, wobei die Kupplung 200 in dieser Ausführung einen Zylindermagneten beziehungsweise Hubmagneten als Aktuator 240 aufweist. Der Aktuator 240 ist in dieser Ausführung dazu eingerichtet, durch die Ansteuerung 120 einen gegenüber der Kupplung 200 in radialer Richtung angeordneten zylindrischen Stift 242 in einer am Umfang der Kupplung 200 und zwischen der ersten Kupplungskomponente 210 und der zweiten Kupplungskomponente 220 angeordneten Nut 243 zu positionieren. Eine erste Randfläche 244 der Nut 243 wird von der ersten Kupplungskomponente 210 und eine zweite Randfläche der Nut 243 wird vorteilhafterweise von der zweiten Kupplungskomponente 220 gebildet, wobei die zweite Randfläche der Nut 243 entlang des Umfangs gerade verläuft und die zweite Kupplungskomponente 220 unbeweglich gegenüber der Welle 271 ist. Die Nut 243 weist entlang des Umlaufs wenigstens eine Verengung beziehungsweise eine Kurve an der ersten Randfläche 244 auf, welche zur zweiten Randfläche der Nut 243 hingerichtet ist. Bei einer Drehung der Kupplung 200 wird der Stift 242 durch die Nut 243 bis zur Verengung geführt. Dort angekommen wird der Stift entlang der erste Randfläche 244 geführt, allerdings ist die Nut 243 enger als der Durchmesser des Stifts 242, wodurch eine Kraft in axialer Richtung auf die erste und zweite Kupplungskomponente 220 erzeugt wird. Da die zweite Kupplungskomponente 220 axial unbeweglich ist, wird die erste Kupplungskomponente 210 in axialer Richtung und von der zweiten Kupplungskomponente weg verschoben. Dadurch ist der mechanische Kontakt zwischen der ersten Kupplungskomponente 210 und der zweiten Kupplungskomponente 220 getrennt. Bei einer weiteren Drehung des Kupplungs in der vorgegebenen Drehrichtung wird der Stift 242 gegenüber der ersten Kupplungskomponente 210 an einer anderen Umlaufkante 245 positioniert, wobei der Stift 242 insbesondere gleichzeitig radial tiefer zwischen der ersten Kupplungskomponente 210 und der zweiten Kupplungskomponente 220 positioniert und zwischen der Umlaufkante 245 und der zweiten Randfläche der Nut 243 geführt wird. Zur Deaktivierung der Wegfahrsperre wird der Stift 242 in radialer Richtung zum Aktuator hin und außerhalb der Oberfläche des ersten Kupplungskomponente 210 und der zweiten Kupplungskomponente 220 gezogen beziehungsweise positioniert.

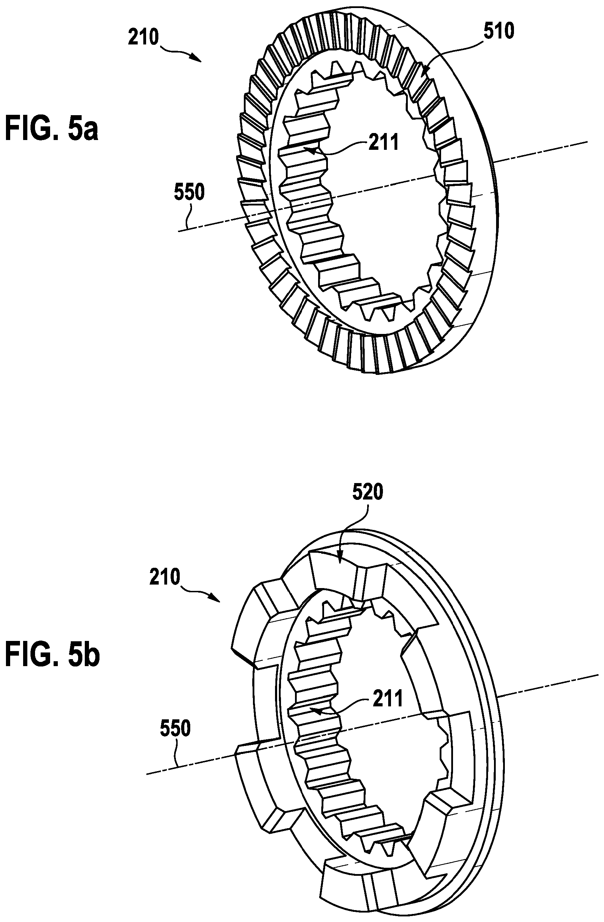

In Figur 5a ist eine bevorzugte Ausführung der ersten Kupplungskomponente 210 der Kupplung 200 als Zahnscheiben-Freilaufs dargestellt. Die erste Kupplungskomponente 210 ist eine Zahnscheibe beziehungsweise ringförmig und weist eine Anzahl an geraden und in axialer Richtung verlaufender Nuten 211 an einem Innenumfang der ersten Kupplungskomponente auf. Die ringförmige erste Kupplungskomponente 210 ist dazu eingerichtet, mittels der Nuten 211 an dem Innenumfang und mittels Schienen 272 auf einer Welle 271 in axialer Richtung geführt zu werden. Die erste Kupplungskomponente 210 ist ferner dazu eingerichtet, mechanisch lösbar mit einer zweiten Kupplungskomponente 220 kontaktiert beziehungsweise verbunden zu werden. Die erste Kupplungskomponente 210 weist eine Vielzahl axial ausgeprägter und in Umfangsrichtung der Zahnscheibe gleichmäßig verteilter keilförmig geformter Zähne 510 auf. Die erste Kupplungskomponente 210 gemäß Figur 5a ist bei einem mechanischen Kontakt beziehungsweise Eingriff mit einer korrespondierenden zweiten Kupplungskomponente 220 dazu eingerichtet, ein Drehmoment in einer vorgegebenen Drehrichtung um die zentrale Achse 550 zu übertragen und bei einer Drehung entgegen der vorgegebenen Drehrichtung frei drehbar mit der zweiten Kupplungskomponente 220 verbunden zu sein.

In Figur 5b ist eine erste Kupplungskomponente 210 einer Kupplung 200 dargestellt. Die erste Kupplungskomponente 210 weist gegenüber der Figur 5b eine Vielzahl axial ausgeprägter und in Umfangsrichtung der Zahnscheibe gleichmäßig verteilter Zähne 520 auf. Die Zähne sind bogenförmig und insbesondere nicht keilförmig ausgeführt. Die erste Kupplungskomponente 210 gemäß Figur 5b ist bei einem mechanischen Kontakt beziehungsweise Eingriff mit einer korrespondierenden zweiten Kupplungskomponente 220 dazu eingerichtet, ein Drehmoment in jeder der beiden Drehrichtungen um die zentrale Achse 550 der ersten Kupplungskomponente auf die in Eingriff stehende zweite Kupplungskomponente 220 zu übertragen. Ferner weist die erste Kupplungskomponente 210 gemäß Figur 5b wie in Figur 5a gerade und in axialer Richtung verlaufende Nuten 211 am Innenumfang auf.

## Patentansprüche

1. Verfahren zur Wegfahrsperre eines Elektrofahrrads, wobei ein Antriebsstrang des Elektrofahrrads eine Kupplung (200) aufweist, welche eine erste Kupplungskomponente (210) und eine zweite Kupplungskomponente (220) umfasst, welche koaxial zueinander angeordnet und dazu eingerichtet sind, durch einen lösbaren mechanischen Kontakt drehfest miteinander verbunden zu sein,
wobei das Verfahren die folgenden Schritte umfasst
• Erfassung (110) einer Eingabe eines Nutzers zur Aktivierung einer Wegfahrsperre, und
• Ansteuerung (120) eines Aktuators (240) in Abhängigkeit der erfassten Eingabe, wodurch die erste Kupplungskomponente (210) und/oder die zweite Kupplungskomponente (220), welche jeweils als eine ringförmige Zahnscheibe ausgebildet sind, in axialer Richtung verschoben wird, wodurch der mechanische Kontakt zwischen der ersten Kupplungskomponente (210) und der zweiten Kupplungskomponente (220) getrennt wird, wobei
• der mechanische Kontakt durch eine Federkraft in einer axialen Richtung auf die erste Kupplungskomponente oder die zweite Kupplungskomponente und in Richtung der jeweils anderen Kupplungskomponente resultiert.

2. Verfahren nach Anspruch 1, wobei die Erfassung (110) der Eingabe des Nutzers zur Aktivierung einer Wegfahrsperre durch eine Erfassung einer Entnahme einer Anzeigevorrichtung aus einer Halterung des Elektrofahrrads für die Anzeigevorrichtung erfolgt.

3. Verfahren nach einem der vorhergehenden Ansprüche, wobei nach der Ansteuerung des Aktuators folgender Schritt durchgeführt wird
• Erfassung (130) einer weiteren Eingabe des Nutzers zur Deaktivierung der Wegfahrsperre, und
• Ansteuerung (140) des Aktuators (240) in Abhängigkeit der erfassten weiteren Eingabe zur Deaktivierung der Wegfahrsperre, wodurch die erste Kupplungskomponente (210) und/oder die zweite Kupplungskomponente (220) in axialer Richtung verschoben und die erste Kupplungskomponente (210) und die zweite Kupplungskomponente (220) miteinander in mechanischen Kontakt gebracht werden.

4. Verfahren nach einem der vorhergehenden Ansprüche, wobei durch die Ansteuerung (120) des Aktuators (240) ein Stellzahnrad (249) gedreht wird, welches in eine Verzahnung (232) eines Schraubelements (230) eingreift, wobei das Schraubelement ein Gewinde (231) und einen mechanischen Anschlag (233) aufweist, wobei das Schraubelement (230) durch die erzeugte Drehung mittels des Gewindes (231) gegenüber einem feststehenden Gegengewinde (281) verdreht und in axialer Richtung bewegt wird, wobei das bewegte Schraubelement (230) die erste Kupplungskomponente (210) und/oder die zweite Kupplungskomponente (220) in axialer Richtung mittels des mechanischen Anschlags (233) des Schraubelements (230) verschiebt.

5. Verfahren nach einem der vorhergehenden Ansprüche, wobei die erste Kupplungskomponente (210) und/oder die zweite Kupplungskomponente (220) magnetisiert ist und der Aktuator (240) eine Spule (241) umfasst, wobei während der Ansteuerung (120) mittels der Spule (241) ein magnetisches Feld erzeugt wird, welches auf die magnetisierte erste Kupplungskomponente (210) und/oder die magnetisierte zweite Kupplungskomponente (220) wirkt, wobei durch eine resultierende Magnetkraft die erste Kupplungskomponente (210) und/oder die zweite Kupplungskomponente (220) in axialer Richtung verschoben und der mechanische Kontakt zwischen der ersten Kupplungskomponente (210) und der zweiten Kupplungskomponente (220) getrennt werden.

6. Verfahren nach einem der vorhergehenden Ansprüche, wobei der Aktuator (240) dazu eingerichtet ist, durch die Ansteuerung (120) einen zylindrischen Stift (242) in einer am Umfang der Kupplung (200) und zwischen der ersten Kupplungskomponente (210) und der zweiten Kupplungskomponente (220) angeordneten Nut (243) zu positionieren, wobei der in der Nut (243) positionierte Stift (242) bei einer Drehung der Kupplung (200) durch die Nut (243) geführt wird, wobei die Nut (243) eine Verengung (244) aufweist, wobei die Kupplung (200) bei einer Drehung der Kupplung (200), insbesondere in einer vorgegebenen Drehrichtung, dazu eingerichtet ist, die erste Kupplungskomponente und/oder die zweite Kupplungskomponente in axialer Richtung mittels des Stifts (242) und der Verengung (244) zu verschieben.

7. Kupplung (200) für ein Elektrofahrrad, insbesondere ein Freilauf, wobei die Kupplung (200) wenigstens folgende Komponenten umfasst
• eine erste Kupplungskomponente (210) und eine zweite Kupplungskomponente (220), welche jeweils als eine ringförmige Zahnscheibe ausgebildet sind und welche koaxial zueinander angeordnet und dazu eingerichtet sind, durch einen lösbaren mechanischen Kontakt zwischen der ersten Kupplungskomponente (210) und der zweiten Kupplungskomponente (220) bei einer Drehung der Kupplung (200) in zumindest einer vorgegebenen Drehrichtung drehfest verbunden zu sein,
wobei der mechanische Kontakt durch eine Federkraft in einer axialen Richtung auf die erste Kupplungskomponente oder die zweite Kupplungskomponente und in Richtung der jeweils anderen Kupplungskomponente resultiert, und
• einen Aktuator (240), wobei der Aktuator (240) dazu eingerichtet ist, die erste Kupplungskomponente (210) und/oder die zweite Kupplungskomponente (220) in axialer Richtung zu verschieben, wodurch der mechanische Kontakt zwischen der ersten und zweiten Kupplungskomponente (210, 220) getrennt wird.

8. Kupplung nach Anspruch 7, wobei die Kupplung (200) folgende Komponente umfasst
• eine Recheneinheit, wobei die Recheneinheit dazu eingerichtet ist,
i. ein elektrisches oder ein elektromagnetisches Entriegelungssignal zu empfangen, und
ii. den Aktuator (240) in Abhängigkeit des empfangenen Entriegelungssignals zur Erzeugung des mechanischen Kontaktes anzusteuern, wobei das Signal insbesondere einen Identifizierungcode repräsentiert.

9. Kupplung nach einem der Ansprüche 7 oder 8, wobei
• der Aktuator (240) einen Stellmotor aufweist, wobei der Rotor des Stellmotors mit einem Stellzahnrad (249) drehfest verbunden ist, wobei das Stellzahnrad (249) in eine Verzahnung eines Schraubelements (230) eingreift, wobei das Schraubelement (230) dazu eingerichtet ist, mittels eines Gewindes (231) gegenüber einem feststehenden Gegengewinde (281) gedreht und in axialer Richtung bewegt zu werden, wobei das Schraubelement (230) wenigstens einen mechanischen Anschlag (233) aufweist, welcher dazu eingerichtet ist, die erste Kupplungskomponente (210) und/oder die zweite Kupplungskomponente (220) in axialer Richtung zu verschieben.

10. Kupplung nach einem der Ansprüche 7 bis 9, wobei die erste Kupplungskomponente (210) und/oder die zweite Kupplungskomponente (220) magnetisiert ist und der Aktuator (240) eine Spule (241) umfasst, wobei die Spule (241) dazu eingerichtet ist, ein magnetisches Feld zu erzeugen, welches auf die magnetisierte erste Kupplungskomponente (210) und/oder die magnetisierte zweite Kupplungskomponente (220) wirkt.

11. Kupplung nach einem der Ansprüche 7 bis 10, wobei der Aktuator (240) dazu eingerichtet ist, einen Stift (242) in einer am Umfang der Kupplung (200) und zwischen der ersten Kupplungskomponente (210) und der zweiten Kupplungskomponente (220) angeordneten Nut (243) zu positionieren, wobei die Nut (243) dazu eingerichtet ist, den Stift (242) bei einer Drehung der Kupplung (200) in der vorgegebenen Drehrichtung zu führen, wobei die Nut (243) eine Verengung in Richtung einer der Kupplungskomponenten (210, 220) aufweist, wobei die Kupplung (200) bei einer Drehung der Kupplung (200) in der vorgegebenen Drehrichtung dazu eingerichtet ist, die erste Kupplungskomponente und/oder die zweite Kupplungskomponente in axialer Richtung mittels des Stifts (242) und der Verengung (244) zu verschieben.

12. Fahrzeuggetriebe mit einer Kupplung (200) nach einem der Ansprüche 7 bis 11.

13. Antriebseinheit (270) für ein Elektrofahrrad, mit einer Kupplung nach einem der Ansprüche 7 bis 11.

14. Elektrofahrrad mit einer Kupplung (200) nach einem der Ansprüche 7 bis 11 und/oder mit einem Fahrzeuggetriebe nach Anspruch 12 und/oder mit einer Antriebseinheit (270) nach Anspruch 13

## Claims

1. Method for immobilizing an electric bicycle, wherein a drive train of the electric bicycle has a clutch (200) comprising a first clutch component (210) and a second clutch component (220) that are arranged coaxially with respect to one another and are configured to be connected to one another in a rotationally conjoint manner by way of a releasable mechanical contact,
wherein the method comprises the following steps:
• detecting (110) an input of a user for activating an immobilizer, and
• controlling (120) an actuator (240) according to the detected input, whereby the first clutch component (210) and/or the second clutch component (220), which are each in the form of a ring-shaped toothed disc, are/is displaced in an axial direction, whereby the mechanical contact between the first clutch component (210) and the second clutch component (220) is disconnected,
wherein
• the mechanical contact results from an axial spring force on the first clutch component or the second clutch component in the direction of the in each case other clutch component.

2. Method according to Claim 1, wherein detecting (110) the input of the user for activating an immobilizer is realized by detecting removal of a display device from a holder of the electric bicycle for the display device.

3. Method according to either of the preceding claims, wherein the following step is carried out after the control of the actuator:
• detecting (130) a further input of the user for deactivating the immobilizer, and
• controlling (140) the actuator (240) according to the detected further input for deactivating the immobilizer, whereby the first clutch component (210) and/or the second clutch component (220) are/is displaced axially and the first clutch component (210) and the second clutch component (220) are brought into mechanical contact with one another.

4. Method according to one of the preceding claims, wherein controlling (120) the actuator (240) results in rotating an actuating gearwheel (249) which engages into a toothing (232) of a screw element (230), wherein the screw element has a thread (231) and a mechanical stop (233), wherein, due to the rotation generated, the screw element (230), by means of the thread (231), is rotated, and moved axially, in relation to a fixed counterpart thread (281), wherein the moved screw element (230) axially displaces the first clutch component (210) and/or the second clutch component (220) by means of the mechanical stop (233) of the screw element (230).

5. Method according to one of the preceding claims, wherein the first clutch component (210) and/or the second clutch component (220) are/is magnetized and the actuator (240) comprises a coil (241), wherein, while controlling (120) is being carried out, a magnetic field acting on the magnetized first clutch component (210) and/or the magnetized second clutch component (220) is generated by means of the coil (241), wherein, due to a resulting magnetic force, the first clutch component (210) and/or the second clutch component (220) are/is displaced axially and the mechanical contact between the first clutch component (210) and the second clutch component (220) is disconnected.

6. Method according to one of the preceding claims, wherein the actuator (240) is configured such that, as a result of the controlling (120), it positions a cylindrical pin (242) in a groove (243), said groove being arranged at the periphery of the clutch (200) and between the first clutch component (210) and the second clutch component (220), wherein the pin (242) positioned in the groove (243) is guided by the groove (243) during rotation of the clutch (200), wherein the groove (243) has a narrowing (244), wherein, with rotation of the clutch (200), in particular in a predefined direction of rotation, the clutch (200) is configured to axially displace the first clutch component and/or the second clutch component by means of the pin (242) and the narrowing (244).

7. Clutch (200) for an electric bicycle, in particular a freewheel, wherein the clutch (200) comprises at least the following components:
• a first clutch component (210) and a second clutch component (220) that are each in the form of a ring-shaped toothed disc and are arranged coaxially with respect to one another and are configured to be connected in a rotationally conjoint manner by way of a releasable mechanical contact between the first clutch component (210) and the second clutch component (220) with rotation of the clutch (200) in at least one predefined direction of rotation, wherein the mechanical contact results from an axial spring force on the first clutch component or the second clutch component in the direction of the in each case other clutch component, and
• an actuator (240), wherein the actuator (240) is configured to axially displace the first clutch component (210) and/or the second clutch component (220), whereby the mechanical contact between the first and second clutch components (210, 220) is disconnected.

8. Clutch according to Claim 7, wherein the clutch (200) comprises the following components:
• a computing unit, wherein the computing unit is configured
i. to receive an electrical or electromagnetic unlocking signal, and
ii. to control the actuator (240) according to the unlocking signal received so as to produce the mechanical contact, wherein the signal represents in particular an identification code.

9. Clutch according to either of Claims 7 and 8, wherein
• the actuator (240) has an actuating motor, wherein the rotor of the actuating motor is connected in a rotationally conjoint manner to an actuating gearwheel (249), wherein the actuating gearwheel (249) engages into a toothing of a screw element (230), wherein the screw element (230) is configured such that, by means of a thread (231), it is rotated, and moved axially, in relation to a fixed counterpart thread (281), wherein the screw element (230) has at least one mechanical stop (233) which is configured to axially displace the first clutch component (210) and/or the second clutch component (220).

10. Clutch according to one of Claims 7 to 9, wherein the first clutch component (210) and/or the second clutch component (220) are/is magnetized and the actuator (240) comprises a coil (241), wherein the coil (241) is configured to generate a magnetic field that acts on the magnetized first clutch component (210) and/or the magnetized second clutch component (220).

11. Clutch according to one of Claims 7 to 10, wherein the actuator (240) is configured to position a pin (242) in a groove (243), said groove being arranged at the periphery of the clutch (200) and between the first clutch component (210) and the second clutch component (220), wherein the groove (243) is configured to guide the pin (242) during rotation of the clutch (200) in the predefined direction of rotation, wherein the groove (243) has a narrowing in the direction of one of the clutch components (210, 220), wherein, with rotation of the clutch (200) in the predefined direction of rotation, the clutch (200) is configured to axially displace the first clutch component and/or the second clutch component by means of the pin (242) and the narrowing (244).

12. Vehicle transmission having a clutch (200) according to one of Claims 7 to 11.

13. Drive unit (270) for an electric bicycle, having a clutch according to one of Claims 7 to 11.

14. Electric bicycle having a clutch (200) according to one of Claims 7 to 11 and/or having a vehicle transmission according to Claim 12 and/or having a drive unit (270) according to Claim 13.

## Revendications

1. Procédé d'immobilisation d'une bicyclette électrique, dans lequel une chaîne cinématique de la bicyclette électrique comporte un embrayage (200) qui comprend un premier composant d'embrayage (210) et un second composant d'embrayage (220) qui sont agencés de manière coaxiale l'un par rapport à l'autre et sont conçus pour être reliés l'un à l'autre de manière solidaire en rotation par un contact mécanique amovible,
le procédé comprenant les étapes suivantes
• la détection (110) d'une entrée d'un utilisateur pour activer un dispositif d'immobilisation, et
• l'actionnement (120) d'un actionneur (240) en fonction de l'entrée détectée, ce qui provoque le déplacement dans la direction axiale du premier composant d'embrayage (210) et/ou du second composant d'embrayage (220), lesquels sont respectivement réalisés sous la forme d'un disque denté annulaire, ce qui entraîne la séparation du contact mécanique entre le premier composant d'embrayage (210) et le second composant d'embrayage (220), dans lequel
• le contact mécanique résulte d'une force de ressort dans une direction axiale sur le premier composant d'embrayage ou le second composant d'embrayage et en direction de l'autre composant d'embrayage respectif.

2. Procédé selon la revendication 1, dans lequel la détection (110) de l'entrée de l'utilisateur pour activer un dispositif d'immobilisation est effectuée par la détection d'un retrait d'un dispositif d'affichage hors d'un support de la bicyclette électrique destiné au dispositif d'affichage.

3. Procédé selon l'une quelconque des revendications précédentes, dans lequel, après l'actionnement de l'actionneur, l'étape suivante est exécutée
• la détection (130) d'une autre entrée de l'utilisateur pour désactiver le dispositif d'immobilisation, et
• l'actionnement (140) de l'actionneur (240) en fonction de l'autre entrée détectée pour désactiver le dispositif d'immobilisation, ce qui provoque le déplacement dans la direction axiale du premier composant d'embrayage (210) et/ou du second composant d'embrayage (220), et la mise en contact mécanique l'un avec l'autre du premier composant d'embrayage (210) et du second composant d'embrayage (220).

4. Procédé selon l'une des revendications précédentes, dans lequel, par l'actionnement (120) de l'actionneur (240), une roue dentée de réglage (249) est mise en rotation et s'engage dans une denture (232) d'un élément de vissage (230), l'élément de vissage présentant un filetage (231) et une butée mécanique (233), l'élément de vissage (230) étant, par la rotation produite, mis en rotation par rapport à un contre-filetage fixe (281) au moyen du filetage (231) et déplacé dans la direction axiale, l'élément de vissage (230) ainsi déplacé déplaçant le premier composant d'embrayage (210) et/ou le second composant d'embrayage (220) dans la direction axiale au moyen de la butée mécanique (233) de l'élément de vissage (230).

5. Procédé selon l'une des revendications précédentes, dans lequel le premier composant d'embrayage (210) et/ou le second composant d'embrayage (220) est magnétisé et l'actionneur (240) comprend une bobine (241), dans lequel, pendant l'actionnement (120), un champ magnétique est généré au moyen de la bobine (241), lequel agit sur le premier composant d'embrayage (210) magnétisé et/ou le second composant d'embrayage (220) magnétisé, une force magnétique résultante déplaçant dans la direction axiale le premier composant d'embrayage (210) et/ou le second composant d'embrayage (220) et séparant le contact mécanique entre le premier composant d'embrayage (210) et le second composant d'embrayage (220).

6. Procédé selon l'une des revendications précédentes, dans lequel l'actionneur (240) est conçu pour, au moyen de l'actionnement (120), positionner une goupille (242) cylindrique dans une rainure (243) ménagée sur la périphérie de l'embrayage (200) et entre le premier composant d'embrayage (210) et le second composant d'embrayage (220), la goupille (242) positionnée dans la rainure (243) étant guidée à travers la rainure (243) lors d'une rotation de l'embrayage (200), la rainure (243) présentant un rétrécissement (244), l'embrayage (200) étant conçu pour, lors d'une rotation de l'embrayage (200), en particulier dans un sens de rotation prédéfini, déplacer le premier composant d'embrayage et/ou le second composant d'embrayage dans la direction axiale au moyen de la goupille (242) et du rétrécissement (244).

7. Embrayage (200) pour une bicyclette électrique, en particulier roue libre, l'embrayage (200) comprenant au moins les composants suivants
• un premier composant d'embrayage (210) et un second composant d'embrayage (220), lesquels sont respectivement réalisés sous la forme d'un disque denté annulaire, sont agencés de manière coaxiale l'un par rapport à l'autre et sont conçus pour être reliés solidaires en rotation lors d'une rotation de l'embrayage (200) dans au moins un sens de rotation prédéfini, au moyen d'un contact mécanique amovible entre le premier composant d'embrayage (210) et le second composant d'embrayage (220), le contact mécanique résultant d'une force de ressort dans une direction axiale sur le premier composant d'embrayage ou le second composant d'embrayage et en direction de l'autre composant d'embrayage respectif, et
• un actionneur (240), l'actionneur (240) étant conçu pour déplacer le premier composant d'embrayage (210) et/ou le second composant d'embrayage (220) dans la direction axiale, ce qui entraîne la séparation du contact mécanique entre les premier et second composants d'embrayage (210, 220).

8. Embrayage selon la revendication 7, l'embrayage (200) comprenant le composant suivant
• une unité de calcul, l'unité de calcul étant conçue pour
i. recevoir un signal de déverrouillage électrique ou électromagnétique, et
ii. actionner l'actionneur (240) en fonction du signal de déverrouillage reçu afin de générer le contact mécanique, le signal représentant en particulier un code d'identification.

9. Embrayage selon l'une des revendications 7 ou 8, dans lequel
• l'actionneur (240) comporte un servomoteur, le rotor du servomoteur étant relié de manière solidaire en rotation à une roue dentée de réglage (249), la roue dentée de réglage (249) s'engageant dans une denture d'un élément de vissage (230), l'élément de vissage (230) étant conçu pour être, au moyen d'un filetage (231), mis en rotation par rapport à un contre-filetage fixe (281) et déplacé dans la direction axiale, l'élément de vissage (230) présentant au moins une butée mécanique (233) qui est conçue pour déplacer le premier composant d'embrayage (210) et/ou le second composant d'embrayage (220) dans la direction axiale.

10. Embrayage selon l'une des revendications 7 à 9, dans lequel le premier composant d'embrayage (210) et/ou le second composant d'embrayage (220) est magnétisé et l'actionneur (240) comprend une bobine (241), la bobine (241) étant conçue pour générer un champ magnétique qui agit sur le premier composant d'embrayage (210) magnétisé et/ou le second composant d'embrayage (220) magnétisé.

11. Embrayage selon l'une des revendications 7 à 10, dans lequel l'actionneur (240) est conçu pour positionner une goupille (242) dans une rainure (243) ménagée sur la périphérie de l'embrayage (200) et entre le premier composant d'embrayage (210) et le second composant d'embrayage (220), la rainure (243) étant conçue pour guider la goupille (242) lors d'une rotation de l'embrayage (200) dans le sens de rotation prédéfini, la rainure (243) présentant un rétrécissement en direction de l'un des composants d'embrayage (210, 220), l'embrayage (200) étant conçu pour, lors d'une rotation de l'embrayage (200) dans le sens de rotation prédéfini, déplacer le premier composant d'embrayage et/ou le second composant d'embrayage dans la direction axiale au moyen de la goupille (242) et du rétrécissement (244).

12. Transmission de véhicule comprenant un embrayage (200) selon l'une des revendications 7 à 11.

13. Unité d'entraînement (270) pour une bicyclette électrique, comprenant un embrayage selon l'une des revendications 7 à 11.

14. Bicyclette électrique comprenant un embrayage (200) selon l'une des revendications 7 à 11 et/ou une transmission de véhicule selon la revendication 12 et/ou une unité d'entraînement (270) selon la revendication 13.
